# EUROPEAN PATENT APPLICATION

(11) **EP 4 681 543 A1**
(43) Date of publication of application: **21.01.2026**
(21) Application number: 25189845.8
(22) Date of filing: 16.07.2025
(51) Int. Cl.: A22C 25/12

(54) **APPARATUS FOR ORIENTATION OF DEAD OR STUNNED FISH**

(30) Priority: 18.07.2024 NO 20240768
(71) Applicant: LUMIC AS, 5347 Ågotnes (NO)
(72) Inventor: Glesnes, Kåre, 5366 Misje (NO); Strømme, Hans-Magne, 5357 Fjell (NO)
(74) Representative: Acapo Onsagers AS

(57) **Abstract**

This document describes an apparatus (10) for orientation of dead or stunned fish (16) comprising a first conveyer belt (12) and a second conveyor belt (14) for transport of lying fish. Fish (16) is arranged to be transferred from the first conveyor belt (12) and the second conveyor belt (14) via a side-mounted and inclined sliding plate (18). An inclined pusher plate (20) is arranged with a distance over the first conveyor belt (12) so that a space (a) is formed therebetween. The pusher plate (20) is arranged to push fish (16) that is transported head first on the first conveyor belt (12), over to the sliding plate (18) head first and further out an outlet (28) head first and to the second conveyor belt (14). The pusher plate (20) is arranged to catch the tail (16a) of the fish being transported with the tail (16) first on the first conveyor belt (12), in the space (a) below the pusher plate (20), wherewith the fish (16) is turned and pushed over to the sliding plate (18) with the belly or head first and further out an outlet (28) head first and to the second conveyor belt (14).

## Description

### FIELD OF INVENTION

The present invention relates to an apparatus for orientation of dead or stunned fish, comprising a first conveyor belt and a second conveyor belt for transporting lying fish, wherein fish are arranged to be transferred from the first conveyor belt and to the second conveyor belt via a side-mounted and inclined sliding plate.

### BACKGROUND OF THE INVENTION

In fish farming or in the production of juvenile fish for fish farming, the fish will have to undergo various processes for handling and/or treatment, such as vaccination delousing/delousing, etc. Fish that have reached full size must go through several process steps before ending up in the refrigerator in the supermarket. Processing of fish includes, but is not limited to, processes such as gutting dead fish and slaughtering or vaccinating stunned fish.

Before each of these processing steps, especially if the processing is automated, it is an advantage that each fish arrives the process oriented in the same way.

Some of the solutions that mechanically manipulate the fish are not particularly gentle on the fish. This is not good when we are dealing with live fish, and it can also affect the quality and appearance of the slaughtered fish.

To orient fish, there are various techniques and devices. For dead or stunned fish, one possible solution is to let the fish slide down a long inclining board. Fish entering the board with the tail first will in most cases turn and eventually end up head first. However, this requires a relatively long board. The method is also prone to errors, especially when several fish enter the board at the same time, they can end up blocking each other from turning. Furthermore, a fish entering alone, tail first, may not turn if it enters the board perfectly aligned (tail to head) with the direction it is to slide.

CN2010901189U describes a system for separating and aligning the head and tail of a fish body.

SU955888A1 describes a device for orienting fish with heads in one direction.

There is a need for alternative solutions for directional orientation of fish.

### OBJECTS OF THE PRESENT INVENTION

It is an object of the present invention to provide an apparatus for directional orientation of fish, so that all fish end up with head or tail first in the direction of transportation.

### SUMMARY OF THE INVENTION

According to the invention an apparatus for orientation of dead or stunned fish is provided, comprising a first conveyor belt and a second conveyor belt for transport of lying fish, wherein fish is arranged to be transferred from the first conveyor belt to the second conveyor belt via a side-mounted and inclined sliding plate. An inclined pusher plate is arranged with a distance over the first conveyor belt so that a space is formed therebetween. The pusher plate is arranged to push fish that is transported head first on the first conveyor belt, over to the sliding plate head first and further out an outlet head first and to the second conveyor belt. The pusher plate is also arranged to catch the tail of the fish being transported with the tail first on the first conveyor belt, in the space below the pusher plate, wherewith the fish is turned and is pushed over to the sliding plate with the stomach/belly or head first and further out an outlet head first and to the second conveyor belt.

The space below the inclined pusher plate and the first conveyor belt corresponds preferably to the height of the tail on a lying fish to be transported.

Further is the space below the inclined pusher plate and the first conveyor belt preferably less than the height of the head or belly of the lying fish to be transported.

The inclined pusher plate may be adjustably mounted to a mounting bracket in said distance over the first conveyor belt.

The first conveyor belt and the second conveyor belt may have opposite transporting direction, where the fish is transported further with the head first on the second conveyor belt.

In an embodiment of the apparatus according to the invention the second conveyor belt may be arranged lower than the outlet.

In this regard, the first conveyor belt and the second conveyor belt may have the same transport direction, with the fish leaving the outlet head first and being dropped onto the second conveyor belt for further transport tail first.

The sliding plate may comprise at least one upwardly extending end edge adapted to guide fish, particularly fish transported head first, towards an outlet on an outlet channel and to the second conveyor belt.

An outlet channel with an upwardly extending side edge and an outlet may be arranged adjacent to the sliding plate, adapted to guide fish head first to the second conveyor belt.

The apparatus may comprise one or more irrigation pipes arranged adjacent to the sliding plate for supplying water.

The pusher plate may be arranged at an outlet end of the first conveyor belt, said outlet end being arranged higher than the second conveyor belt.

The first conveyor belt may be arranged inclined.

### DESCRIPTION OF THE FIGURES

Preferred embodiments of the invention will now be described, by way of example only, with reference to the following figures, wherein:
Figure 1 shows a fish orienting apparatus according to the invention.
Figure 2 shows a section of the fish orienting apparatus according to the invention.
Figure 3 shows an enlarged section of the fish orienting apparatus according to the invention.
Figure 4 shows orientation of fish being transported tail first in the fish orienting apparatus according to the invention.
Figure 5 shows orientation of fish being transported head first in the fish orienting apparatus according to the invention.
Figure 6 shows a section of the fish orienting apparatus according to the invention, wherein the pusher plate is shown in a distance above a first conveyor belt.

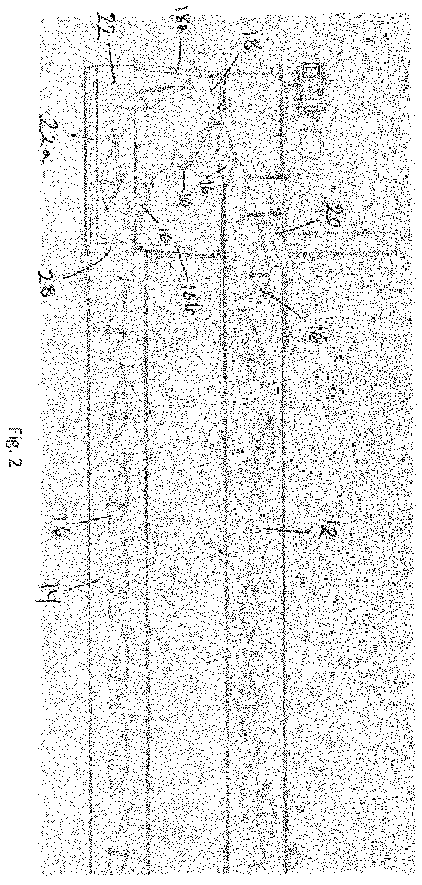

Figure 2 shows a section of the fish orienting apparatus according to the invention.

### DESCRIPTION OF PREFERRED EMBODIMENTS OF THE INVENTION

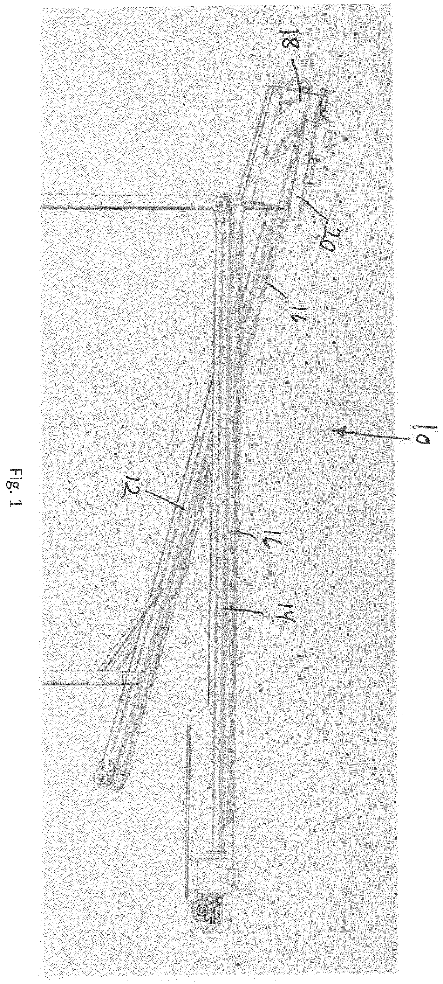

Figure 1 shows a fish orienting apparatus according to the invention, where dead fish or stunned fish is transferred to a first conveyor belt 12 lying with a random orientation on the conveyor belt, i.e. that some fish 16 are lying head first while others are lying tail first. The fish 16 is transferred to a second conveyor belt 14 for transport for further processing, and the fish must then lie in the same orientation, such as with the head first in the direction of transport (to the right in the figure). In an alternative embodiment to be explained later, fish can be transported further on the second conveyor belt 14 with the tail first, in the direction to the left in the figure.

The first conveyor belt 12 and the second conveyor belt 14 is arranged on a foundation and each comprises its own driving motor. The first conveyor belt 12 may as shown be arranged inclined with an outlet end higher than the second conveyor belt 14 horizontally arranged. Whether the conveyor belts 12,14 are arranged inclined or horizontally is not essential to the invention.

At the outlet end of the first conveyor belt 12 it is provided an inclined pusher plate 20 used to push fish over to a sliding plate 18 which falls towards the second conveyor belt 14. An outlet channel 22 is connected to the sliding plate 18 and has an outlet 28 towards the second conveyor belt 14, for fish that are transferred to the second conveyor belt 14.

That the pusher plate 20 is inclined means that the pusher plate is positioned at an angle relative to the transport direction of the first conveyor belt 12.

The sliding plate 18 is further equipped with an upwardly projecting end edge 18a steering or leading fish 16 head first towards the outlet 28 of the outlet channel 22. The sliding plate may on the other side have a second upwardly projecting end edge 18b preventing fish from sliding off the sliding plate 18.

The outlet channel 22 is correspondingly equipped with a longitudinal and upwardly projecting side edge 22a leading the fish to the outlet 28 and further to the second conveyor belt 14.

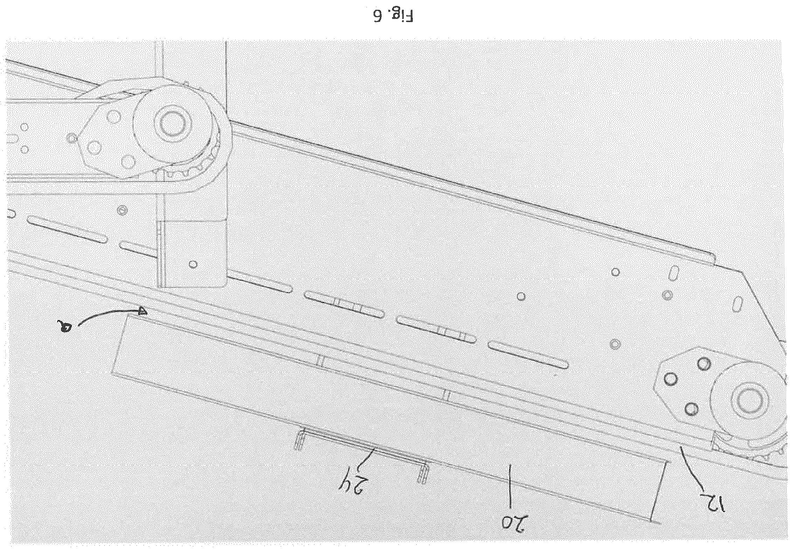

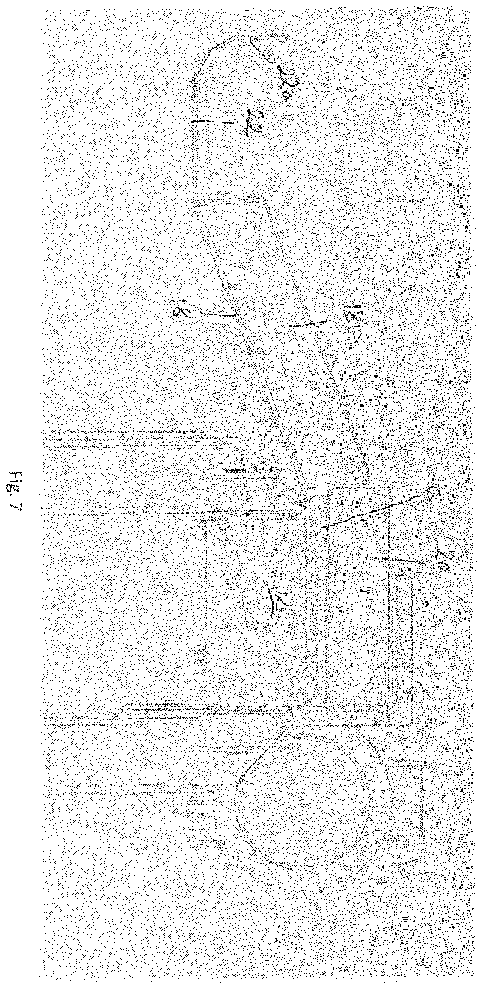

The pusher plate 20 is arranged in a certain distance above the second conveyor belt 12, as shown in fig. 6 and 7, where this distance gives a space a or slip corresponding to the height of the tail 16a to a lying fish 16 being transported and shall be oriented. The distance a is less than the height at the head or belly of the fish. The pusher plate 20 may be adjustably mounted to a mounting bracket 24, so that the space a may be adjusted independently of the size and type of the fish.

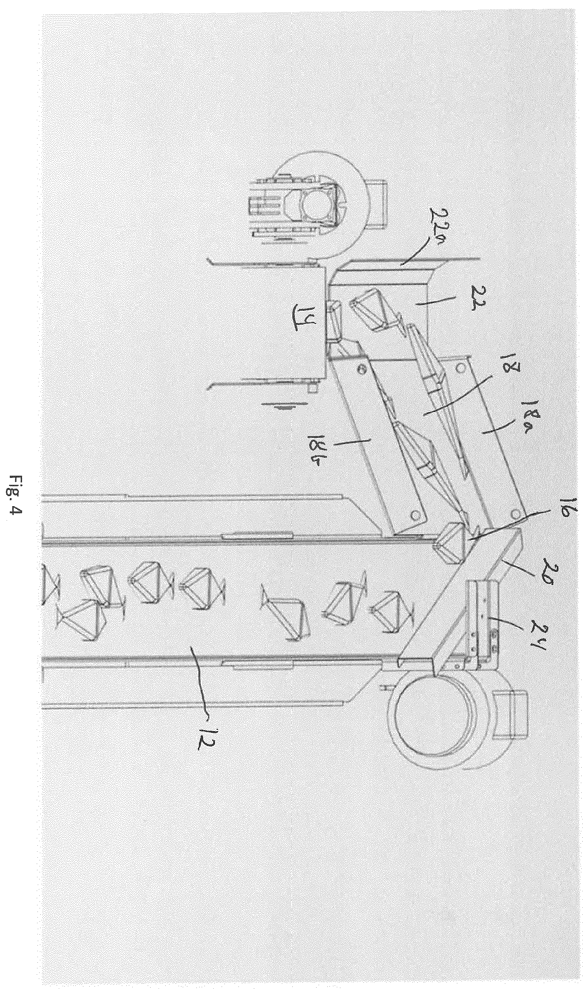

As particularly shown in fig. 2, 4 and 5, fish 16 is transported with a random orientation on the first conveyor belt 12, while all fish being transported on the second conveyor 14 lies with the head first.

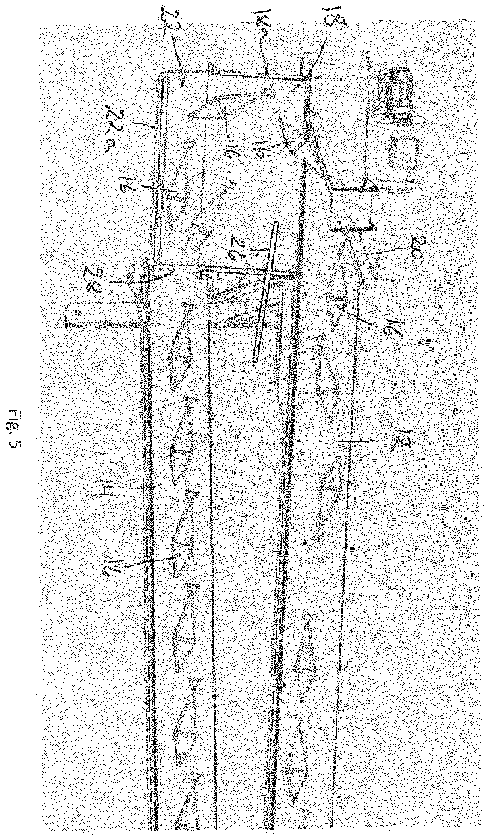

Fish 16 arriving with head first on the first conveyor belt 12, for example as shown in fig. 5, is pushed over to the sliding plate 18 head first, as the head or belly cannot go below the space a which is between the first conveyor belt and the pusher plate 20. Depending on the speed of the first conveyor belt 12, the fish will likely hit the end edge 18a of the sliding plate 18, turn towards the outlet channel 22, and slide further to the outlet channel 22 where the head of the fish hits the side edge 22a of the outlet channel 22 and is turned even more in the transport direction of the second conveyer belt 24 before the fish slides out through the outlet 28 and onto or down to the second conveyer belt head first. Fish 16 coming head first may therefore be said to take a "U-turn" from the first conveyor belt 12 to the second conveyor belt 14.

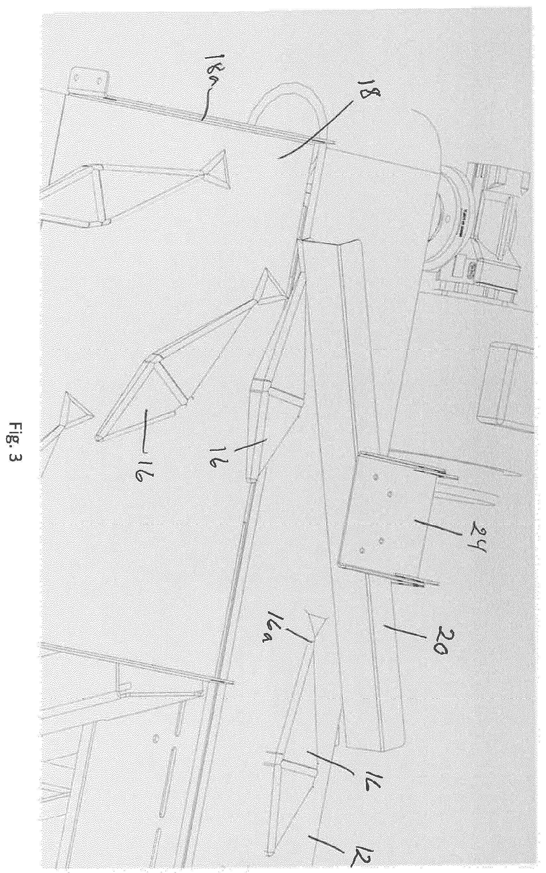

Fish 16 arriving tail first on the first conveyor bel 12t, as particularly shown in fig. 2-4, will hit the pusher plate 20 so that the tail 16a goes in under the space a between the pusher plate 20 and the first conveyor belt 12. This cases the fish 16 to be slowed down and the belly of the fish slides off first over the sliding plate, and the fish is thereby sliding with the head in the direction of the outlet channel 22 where it hits the upward projecting side edge 22a and turns even more in the transport direction of the second conveyor belt 14 before the fish is sliding out through the outlet 28 and onto or down to the second conveyor belt head first.

Depending on the speed of the first conveyor belt 12, the fish's tail may slightly bump against the end edge 18a of the sliding plate 18, but in that case the fish will only be turned towards the outlet chute 22, and in a corresponding manner slide further to the outlet chute 22.

As shown in the figures, fish 16 being transported on the second conveyor belt 14 have all the same orientation with head first.

The second conveyor belt 14 may alternatively be positioned somewhat lower than the outlet 22 of the outlet channel 22 (not shown) and run under the sliding plate 18 with the outlet channel 22. As explained, fish are released from the outlet 28 head first and then onto the second conveyor belt 14. This allows fish to be transported further in both directions. Fish 16 can be transported further head first in the transport direction (i.e. to the right in the figures) if the first and second conveyor belts 12,14 have opposite transport directions, or fish can be transported tail first (i.e. to the left in the figures) if the first and second conveyor belts 12,14 have the same transport direction.

In relation to fig. 1, the second conveyor belt 14 in the alternative embodiment will be located some distance below the sliding plate 18 and the outlet 28, as well as further to the left of the figure and transport the fish to the left.

Some processing machines depend on getting the fish in with tail first, while others depend on getting the fish in with head first, which the invention then takes into account.

One or more water pipes 26 may be located above or at the sliding plate 18 for supplying water so that the skid plate 18 is kept moist and provides the best possible glide.

## Claims

1. An apparatus (10) for orientation of dead or stunned fish (16) comprising a first conveyer belt (12) and a second conveyor belt (14) for transport of lying fish, wherein fish (16) is arranged to be transferred from the first conveyor belt (12) and the second conveyor belt (14) via a side-mounted and inclined sliding plate (18);
an inclined pusher plate (20) is arranged with a distance over the first conveyor belt (12) so that a space (a) is formed therebetween; where
the pusher plate (20) is arranged to push fish (16) that is transported head first on the first conveyor belt (12), over to the sliding plate (18) head first and further out an outlet (28) head first and to the second conveyor belt (14);
the pusher plate (20) is arranged to catch the tail (16a) of the fish being transported with the tail (16) first on the first conveyor belt (12), in the space (a) below the pusher plate (20), wherewith the fish (16) is turned and pushed over to the sliding plate (18) with the belly or head first and further out an outlet (28) head first and to the second conveyor belt (14).

2. The apparatus according to claim 1, wherein the space (a) below the inclined pusher plate (20) and the first conveyor belt (12) corresponds to the height of the tail (16a) of a lying fish (16) to be transported.

3. The apparatus according to claim 1, wherein the space (a) below the inclined pusher plate (20) and the first conveyor belt (12) is less than the height of the head or belly of the lying fish (16) to be transported.

4. The apparatus according to claim 1, wherein the inclined pusher plate (20) is adjustably mounted to a mounting bracket (24) in said distance over the first conveyor belt (12).

5. The apparatus according to claim 1, wherein the first conveyor belt (12) and the second conveyor belt (14) have opposite transporting direction, where the fish (16) is transported further with the head first on the second conveyor belt (14).

6. The apparatus according to claim 1, wherein the second conveyor belt (14) is arranged lower than the outlet (28).

7. The apparatus according to claim 1, wherein, the first conveyor belt (12) and the second conveyor belt (14) have the same transport direction, with the fish (16) leaving the outlet (28) head first and being dropped onto the second conveyor belt (14) for further transport tail first.

8. The apparatus according to claim 1, wherein the sliding plate (18) comprises at least one upwardly extending end edge (18a) arranged to guide fish (16), particularly fish (16) transported head first, towards an outlet (28) on an outlet channel (28) and to the second conveyor belt (14).

9. The apparatus according to claim 1, wherein an outlet channel (22) with an upwardly extending side edge (22a) and an outlet (28) is arranged adjacent to the sliding plate (18), arranged to guide fish (16) head first to the second conveyor belt (16).

10. The apparatus according to claim 1, wherein one or more irrigation pipes (26) arranged adjacent to the sliding plate (18) for supplying water.

11. The apparatus according to claim 1, wherein pusher plate (20) is arranged at an outlet end of the first conveyor belt (12), said outlet end being arranged higher than the second conveyor belt (14).
